Europäisches Patentamt

European Patent Office

Office européen des brevets

(11) Publication number: 0 485 051 A2

# EUROPEAN PATENT APPLICATION

(21) Application number: 91306301.2

(22) Date of filing: 11.07.91

(51) Int. Cl.⁵: G06K 9/20

(30) Priority: 17.10.90 GB 9022483

(43) Date of publication of application:
13.05.92 Bulletin 92/20

(84) Designated Contracting States:
DE FR GB IT NL

(71) Applicant: INTERNATIONAL COMPUTERS LIMITED
ICL House
Putney, London, SW15 1SW(GB)

(72) Inventor: Farrow, Gary Stuart Donald
117 Gwydir Street
Cambs CA1 2LG(GB)
Inventor: Xydeas, Costos Spyros
13 Thorngrove Hill
Wilslow, Cheshire SK9 1DF(GB)

(74) Representative: Guyatt, Derek Charles Patents
and Licensing International Computers
Limited et al
Six Hills House London Road
Stevenage, Herts, SG1 1YB(GB)

(54) Detecting skew in digitised images.

(57) A method of detecting skew in a digitised document image as described. The method comprises forming a transformation of the image, to generate an array H(D, A) representing the number of black pixels which lie on lines with angle A and perpendicular displacement D. The dominant angle A in this array, determined by calculating an energy function from the array, is taken as the angle of skew.

## Background to the invention

This invention relates to a method and apparatus for detecting and correcting skew in digitised images.

It is well known to digitise paper documents by scanning them to produce a bit-mapped binary image. This image may then be processed electronically, for example by a segmentation process which divides the image up into areas of text and graphics, and by character recognition and graphics recognition processes.

It has been found that skew or misalignment of a document at the input stage can adversely affect the performance of the processes. For example, the segmentation process may fail for relatively small skew angles of the order of 1 degree. Moreover, character recognition algorithms deteriorate for severely skewed characters.

The object of the invention is therefore to provide a method of detecting (and hence correcting) misalignment of a document image.

## Summary of the Invention

According to the invention there is provided a method of detecting skew in a digitised document image, comprising the steps:

a) performing a transformation on the image to generate an array H(D , A) where each element H(D, A) in the array represents the number of pixels of a predetermined characteristic (e.g. black pixels) in the image that lie on a straight line at an angle A to a predetermined direction and at a perpendicular distance D from a predetermined origin, and

b) finding a dominant value of the angle A in the array.

## Brief Description of the Drawings

Figure 1 is a graph illustrating the principle of the invention.

Figure 2 is a block diagram showing apparatus for performing the invention.

Figure 3 is a flow chart showing the steps involved in the invention.

## Description of an Embodiment of the Invention

One method in accordance with the invention will now be described by way of example with reference to the accompanying drawings.

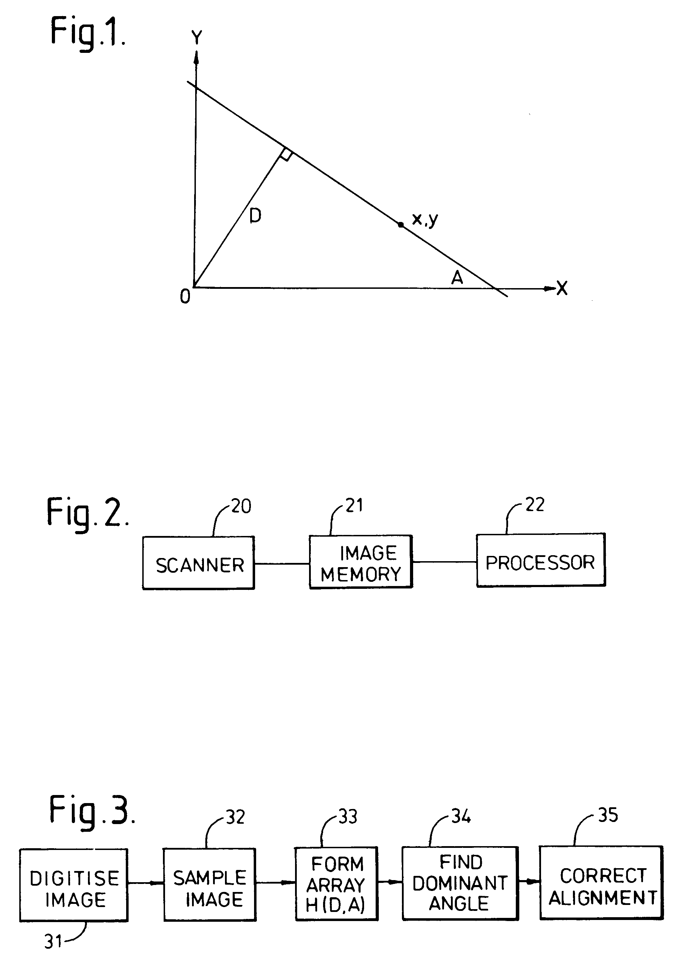

Referring to Figure 1, this shows an image plane defined by X and Y axes and an origin O. The figure also shows a point (x, y) lying on a straight line at an angle A to the horizontal axis, and at a perpendicular distance D from the origin O.

It will be seen that any given point (x, y) lies on a set of lines, with different angles A. In practice the value of A is quantised in a number of discrete steps, so that the number of lines on which a given point lies is finite. For any given angle A, the perpendicular distance D is given by:

$$D = x \sin A + y \cos A \qquad (1)$$

The value of D is also quantised in discrete steps.

An array H(D, A) can now be defined, such that each element H(D, A) represents the number of black image points (pixels) which lie on lines with quantised angle A and quantised displacement value D. It can be seen that straight lines in the image will produce local maxima in this array, since all the pixels in a line will share the same values of D and A. This is true not only for continuous lines, but also for disjointed lines, such as typewritten text. The dominant value of the angle A therefore gives an indication of the angle of alignment of the document. For example, in the case if a typewritten document, the dominant value of A indicates the angle of the lines of text to the horizontal. In other words, the dominant value of A indicates the amount of skew or misalignment of the document.

One way of choosing the dominant value of A would be simply to find the element H(D, A) with the largest value. However, this allows the possibility of error due to spurious peaks. To overcome this problem, an "energy" function e(A) is used which takes into account the number of local maxima, as well as their size. This function is defined by the equation:

$$e(A) = \sum (H(D, A))^2 \qquad ---(2)$$

where the sum is over all possible values of D. The dominant angle of skew is then taken to be the angle A for which e(A) is a maximum.

Referring now to Figure 2, this shows apparatus for implementing the invention.

The apparatus comprises a document scanner 20, an image memory 21, and a processor 22. These may all be conventional. The scanner 20 may, for example, be an AGFA S200 scanner with a resolution of 300 dots per inch 118 dots per centimetre). The processor 22 may be a SUN 3/160 workstation.

Referring to Figure 3, this is a flowchart showing the way in which skew is measured and corrected.

In step 31, a document is scanned by scanner 20, to produce a digitised image which is stored in the memory 21.

In step 32, the processor 22 operates on the stored image, by sampling every twentieth pixel in every twentieth line, to produce a coarsened image. It has been found in practice that, for a document scanned at 300 dots per inch, this coarsening of the image does not have any detrimental effect on the accuracy of the skew measurement, and allows the processing to be carried out more rapidly. The amount by which the image can be coarsensed depends on the resolution of the original image.

In step 33, the processor performs a transformation of the image, as follows. First, the array H(D, A) is initialised to zero. Next, the (coarsened) image is scanned, and for each black pixel (x,y) in the image, the following action is performed:

For all quantised values of angle A, from -Amax to +Amax (where Amax is a predetermined maximum value):

    a) calculate the corresponding quantised displacement value D according to equation (1) above.

    b) increment the array element H(D, A) by one.

In this embodiment, the maximum value Amax is chosen to be 20 degrees, and the angle A is quantised into 200 levels in this range, giving a resolution of plus or minus one tenth of a degree. The displacement value D is quantised into 50 levels, corresponding to the maximum number of text rows that can be expected on an A4 page. Hence, the array H(D, A) is a 50 x 200 element array.

In step 34, the array H(D, A) is processed as follows. For each value of A, the function e(A) is calculated according to equation (2) above. The maximum value of e(A) is then found, and the corresponding value of A is taken as the angle of skew of the document.

Finally, in step 35, the skew of the document is corrected. This may be performed by physically realigning the document in the scanner by mechanical means, or by electronically rotating the image in the memory.

## Claims

1. A method of detecting skew in a digitised document image, comprising the steps:

    a) performing a transformation on the image to generate an array H(D, A) where each element H(D, A) in the array represents the number of pixels of a predetermined characteristic (e.g. black pixels) in the image that lie on a straight line at an angle A to a predetermined direction and at a perpendicular distance D from a predetermined origin, and

    b) finding a dominant value of the angle A in the array

2. A method according to Claim 1 wherein the step of finding the dominant value of the angle comprises the steps:

    a) for each value of A, generating a function e(A) equal to the sum of the squares of all elements H(D, A) corresponding to that value of A, and

    b) finding the maximum value of e(A).

3. A method according to Claim 1 or 2 including the step of coarsening the digitised document image prior to performing said transformation.

4. A method according to any preceding claim, including the further step of re-aligning said image by a correction angle equal to said dominant value.

5. Document processing apparatus comprising:

    a) means (31) for scanning and digitising a document to produce a digitised document image,

    b) means (33) for performing a translation on the image to generate an array H(D, A) where each element H(D, A) in the array represents the number of pixels of a predetermined characteristic (e.g. black pixels) in the image that lie on a straight line at an angle A to a predetermined direction and at a perpendicular distance D from a predetermined origin, and

    c) means (34) for processing the array H(D, A) to find a dominant value of the angle A in the array.

6. Apparatus according to Claim 5 wherein said means (34) for processing the array comprises:

    a) means for generating, for each value of A, a function e(A) equal to the sum of squares of all elements H(D, A) corresponding to that value of A, and

    b) means for finding the maximum value of e(A).

7. Apparatus according to Claim 5 or 6 further including means (32) for coarsening the digitised document image prior to performing said transformation.

8. Apparatus according to any one of Claims 5 to 7 further including means (35) for re-aligning said document by a correction angle equal to said dominant value of the angle A.

# Fig.1.

# Fig.2.

# Fig.3.